Europäisches Patentamt

European Patent Office

Office européen des brevets

(19)

(11) Publication number: **0 412 709 A1**

# EUROPEAN PATENT APPLICATION

(12)

(21) Application number: 90308401.0

(22) Date of filing: 31.07.90

(51) Int. Cl.⁵: **B32B 7/06**

(30) Priority: **11.08.89 GB 8918379**

(43) Date of publication of application:
**13.02.91 Bulletin 91/07**

(84) Designated Contracting States:
**BE DE DK FR GB NL**

(71) Applicant: **SCOTT & FYFE LIMITED**
**Scotscraig Works**
**Tayport Fife DD6 9DQ Scotland(GB)**

(72) Inventor: **Tough, William Hamish**
**Craig Bank, 2 Provost Road**
**Tayport, Fife, Scotland DD6 9JE(GB)**

(74) Representative: **Hustwitt, Philip Edward et al**
**Hustwitt & Co. St. George's House 44 Hatton**
**Garden**
**London, EC1N 8ER(GB)**

(54) **Composite sheet material.**

(57) A composite sheet material is made by creping two sheets of plain paper material together in a single operation on a creping cylinder so that the adjacent surfaces of the creped paper sheets are in intimate surface contact over their whole areas including the similar interlocking crimps. Optimally the contacting creped surfaces are lightly adhered together. The composite sheet material so made is handleable as a single sheet and resistant to shear forces but capable of splitting into two separate sheets when subjected to a force perpendicular "to its surface as happens when the composite sheet material has been used to bond together two articles which are subsequently to be separated.

EP 0 412 709 A1

# COMPOSITE SHEET MATERIAL

This invention relates to a composite sheet material.

Many composite sheet materials are known for a variety of purposes. For exam in our U.K. Patent No. 1 422 940 we have described a composite sheet material which comprises rows of stitches formed in a base crepe paper sheet for use as a backing material for a carpet underlay. Further proposals for composite sheet material for a variety of uses are made in our U.K. Patent Applications Nos. 2 182 071A, 2 209 350A, and 2 209 351A.

According to one aspect of the present invention there is provided a method of making a composite sheet material comprising a plurality of sheets of sheet material, characterised by the steps of feeding a plurality of sheets of a plain sheet material to a creping machine, and creping the plurality of sheets of plain sheet material together to produce a composite sheet material comprising a plurality of creped sheets having the adjacent crimped surfaces of the creped sheets in contact with each other over substantially the whole area of the adjacent crimped surfaces including the areas of the crimps formed in the creped sheets.

According to another aspect of the present invention there is provided a composite sheet material comprising a plurality of sheets of sheet material characterised in that the sheets are creped together such that the adjacent crimped surfaces of the creped sheets are in contact with each other over substantially the whole area of the adjacent crimped surfaces.

A composite sheet material according to the present invention has a plurality of sheets, preferably two sheets, creped together so that virtually every fold of every crimp in one sheet is also present in the other or others, and the folds of the various crimps hold the plurality of creped sheets together so that they may be handled and used as though they were a single sheet of material. In particular the interlocking of the crimps in the individual sheets make the composite sheet material resistant to shear forces. However, in order to give the composite sheet material greater cohesiveness it is preferred to provide for some adhesion between the contacting surfaces of the individual sheets.

A composite sheet material according to the present invention has a particular use in applications where two articles may be bonded together and used in such bonded condition for a substantial period of time but eventually it is desired to separate them. In such circumstances the articles are bonded together by adhering one surface of the composite sheet material of the present invention to one article and adhering the other surface of the composite sheet material of this invention to the other article. Because the creped sheets of the composite sheet material. have their surfaces in close contact within the crimps of the creped sheets the composite sheet material of the present invention has considerable strength against a shear force applied between the two articles which it is being used to bond together. However when the time comes for the two articles to be separated and they are pulled apart, ie. by a force at right angles to a shear force between the two articles, then the composite sheet material will separate leaving one creped sheet bonded to one article while the other creped sheet remains bonded to the other article.

This property of the composite sheet material according to the present invention is particularly useful in connection with floor coverings.

It is well known that a carpet may be adhered directly to a base floor surface but considerable difficulties arise when the carpet becomes worn or discoloured and it is desired to replace it. It is extremely difficult, if not impossible, to separate the carpet cleanly from the base floor surface.

Similarly it is known to adhere a carpet underlay to a base floor surface and then to adhere a floor covering such as a carpet to the upper surface of the carpet underlay. Again major problems arise when it is desired to replace the carpet or the carpet and the carpet underlay.

In accordance with one aspect of the present invention there is provided a method of laying a floor covering in which the floor covering is secured to a base floor surface through a composite sheet material according to the present invention, the composite sheet material being adhered to the base floor surface and to the floor covering. The floor covering may be an underlay or a carpet.

It is within the scope of this aspect of tbe present invention for the composite sheet material to be provided as a separate roll a portion of which is first adhered to the base floor surface. The carpet underlay or carpet will then be adhered to the upper surface of the composite sheet material already adhered to the base floor surface.

In accordance with another aspect of the present invention, the composite sheet material fed from a separate roll may be adhered on the upper surface of a carpet underlay which is already adhered to a base floor surface, the lower surface of the carpet being then adhered to the upper surface of the composite sheet material of the present invention. The carpet may then be replaced while retaining the underlay secured in position on the base floor surface.

However it is preferred for the composite sheet material to be first adhered to a carpet underlay or to the under side of a carpet. When the composite sheet material is adhered to one surface of a carpet underlay, the carpet underlay may be bonded to the base floor surface either with the composite sheet material in contact with the base floor surface or with the composite sheet material uppermost, depending on whether or not it is intended that the carpet underlay shall subsequently be lifted for replacement. When the composite sheet material is adhered to the under side of a carpet, the carpet may be adhered direct to the base floor surface or to an underlay which is already secured to the base floor surface.

Further in accordance with the present invention there is provided a carpet underlay comprising a sheet of resilient cellular material, a backing sheet material adhered to one surface of the resilient cellular sheet material, and a composite sheet material according to the present invention adhered to the other surface of the resilient cellular sheet material.

The backing sheet material is a material which will give planar dimensional stability to the sheet of resilient cellular material, which is preferably a sheet of cellular rubber. Advantageously the backing sheet material is a stitched crepe paper sheet such as is disclosed in our U.K. Patent No. 1,422,940. Improved forms of stitched crepe paper sheets are described and claimed in our U.K. Patent Applications Nos. 2 209 350, 2 209 351 and 2 212 823.

As already indicated the composite sheet material of the present invention comprises a plurality of creped sheets acting as a single sheet by virtue of the interlocking which arises from the contact of the adjacent crimped surfaces of the creped sheet with each other over substantially the whole area of the adjacent crimped surfaces.

In accordance with a particular embodiment of the present invention there is provided a composite sheet material comprising a pair of paper sheets creped together with adjacent surfaces of the creped paper sheets in intimate contact throughout the areas of the crimps in the creped paper sheets such that the creped paper sheets are handleable as a single sheet.

The adjacent crimped surfaces of the creped sheets comprising the composite sheet material of the present invention may be lightly adhered together.

The nature of the light adherence between the adjacent crimped surfaces is such as will assist in retaining the plurality of creped sheets as a single sheet for handling purposes but the light adherence must not be such as to prevent the sheets from separating when pulled apart by forces acting at right angles to the surfaces of the sheets. The adherence between the adjacent crimped surfaces may be intermittent or continuous and is preferably provided by using releasable adhesive, for example a non-setting adhesive which remains tacky. Alternatively a relatively weak adhesive may be used, that is to say an adhesive which will break down mechanically without the sheets breaking. Preferably the adhesive is applied in blobs regularly spaced both transversely and longitudinally of the creped sheets.

Preferably a composite sheet material according to the present invention is formed from two sheets of paper and good results have been obtained using two paper sheets of 40 gsm weight before creping. The two paper sheets are advantageously creped together in a single operation using a plain cylinder creping machine.

A composite sheet material in accordance with the present invention has also been formed by creping together three sheets of paper, two of the sheets being of 40 gsm weight and the third sheet being of 67 gsm weight, before creping.

Instead of using paper, other materials such as plastic film may be used in manufacturing a composite sheet material according to, the present invention.

## Claims

1. A method of making a composite sheet material comprising a plurality of sheets of sheet material, characterised by the steps of feeding a plurality of sheets of a plain sheet material to a creping machine, and creping the plurality of sheets of plain sheet material together to produce a composite sheet material comprising a plurality of creped sheets having the adjacent crimped surfaces of the creped sheets in contact with each other over substantially the whole area of the adjacent crimped surfaces including the areas of the crimps formed in the creped sheets.

2. A method according to Claim 1 characterised in that two sheets of the said plain sheet material are creped together.

3. A method according to Claim 1 characterised in that two sheets of plain paper are creped together.

4. A method according to any one of Claims 1 to 3 characterised by including the further step of applying adhesive to at least one sheet of plain sheet material such as to provide a light adhesive to retain the plurality of creped sheets as a single sheet for handling purposes but not to prevent the creped sheets from separating when pulled apart by forces acting at right angles to the surfaces of the sheets.

5. A method according to Claim 4 characterised in that the application of adhesive is continuous.

6. A method according to Claim 4 characterised in that the application of adhesive is intermittent both longitudinally and transversely of the sheet.

7. A method according to any one of Claims 4 to 6 characterised in that the adhesive is a non-setting adhesive.

8. A method according to Claim 1 characterised in that three sheets of plain paper sheet material are creped together.

9. A method according to any one of the preceding Claims wherein the creping of the plain sheets together is effected by a single operation of a plain cylinder creping machine.

10. A method of bonding together two articles which are to be used ink such bonded condition but are subsequently to be separated, the method being characterised by the steps of making a composite sheet material by a method according to Claim 2 and utilising the composite sheet material so made by bonding the exposed surface of one creped sheet to one article and by bonding the exposed surface of the other creped sheet to a second article, the articles being retained in bonded relation against the application of shear forces but separable from one another on application of forces at right angles to shear forces.

11. A method according to Claim 10 characterised in that the creped sheets are creped paper sheets and in that the step of making a composite sheet material includes the step of lightly adhering the contacting surfaces of the paper sheets before creping the paper sheets.

12. A composite sheet material comprising a plurality of sheets of sheet material, characterised in that the sheets are creped together such that the adjacent crimped surfaces of the creped sheets are in contact with each other over substantially the whole area of the adjacent crimped surfaces.

13. A composite sheet material according to Claim 12 characterised in that the material comprises two creped sheets the adjacent crimped surfaces of which are in contact over substantially the whole area thereof.

14. A composite sheet material according to Claim 12 or Claim 13 characterised in that the adjacent crimped surfaces are lightly adhered together.

15. A composite sheet material according to Claim 14 characterised in that the adhesion between the adjacent crimped surfaces is intermittent.

16. A composite sheet material according to Claim 14 characterised in that the adhesion between the adjacent crimped surfaces is continuous.

17. A composite sheet material according to any one of Claims 14 to 16 wherein the adjacent crimped surfaces are adhered together by a non-setting adhesive.

18. A composite sheet material according to Claim 12, characterised in that the material comprises three creped paper sheets.

19. A composite sheet material comprising a pair of paper sheets in surface contact with one another characterised in that the pair of paper sheets are creped together with adjacent surfaces of the creped paper sheets in intimate contact throughout the areas of the crimps in the creped paper sheets, that the, composite sheet material is handleable as a single sheet, is resistant to shear forces, and is separable into two sheets on application of forces at right angles to the surface of the composite sheet material.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | US-A-3 684 603  (CHARLES O.)<br>* the whole document * | 1,12,2,9,<br>10,13,15,<br>19 | B 32 B 7/06 |
| Y,A | GB-A-1 443 629  (SCOTT PAPER)<br>* page 1-2; claims 1-4, 11, 16; figures 1-2 * | 1.12,9,10,<br>11,13,14,<br>17 | |
| A | US-A-3 738 905  (GORDON D.)<br>* column 4, lines 17 - 53; figures 2, 4, 8-11 * | 6,7,9,18 | |
| A | US-A-4 325 768  (GALYN A.)<br>* the whole document * | 2,3,8 | |
| A,D | EP-A-0 224 327  (SCOTT&FYFE) | | |

| | TECHNICAL FIELDS SEARCHED (Int. Cl.5) |
|---|---|
| | B 32 B |

The present search report has been drawn up for all claims

| Place of search | Date of completion of search | Examiner |
|---|---|---|
| The Hague | 08 November 90 | DURAND F.C. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
    document